# EUROPÄISCHE PATENTSCHRIFT

(11) **EP 2 423 036 B1**
(45) Veröffentlichungstag und Bekanntmachung des Hinweises auf die Patenterteilung: **10.10.2012**
(21) Anmeldenummer: 11008989.3
(22) Anmeldetag: 29.08.2008
(51) Int. Cl.: B60N 2/225, B60N 2/433, B60N 2/44, F16H 1/32

(54) **Taumelgetriebe**
Wobble drive
Mécanisme oscillant

(30) Priorität: 11.09.2007 DE 202007012685 U
(43) Veröffentlichungstag der Anmeldung: 29.02.2012
(62) Teilanmeldung aus: 08801751.2
(73) Patentinhaber: Brose Fahrzeugteile GmbH & Co., 96450 Coburg (DE)
(72) Erfinder: Brehm, Horst, 96120 Bischberg (DE); Hofmann, Jochen, 96257 Marktgraitz (DE); Kröner, Gregor, 96120 Bischberg (DE)
(74) Vertreter: FDST Patentanwälte

(56) Entgegenhaltungen:
- WO-A-96/17187
- WO-A2-2009/149876

## Beschreibung

Die vorliegende Erfindung betrifft ein Taumelgetriebe, insbesondere für einen zweiteiligen Verstellbeschlag eines Fahrzeugsitzes.

Bekannte Sitzverstelleinrichtungen weisen häufig Taumelgetriebe auf, die eine Variante von Planetengetrieben darstellen. Mit Hilfe dieser Taumelgetriebe können auf kleinem Raum relativ große Übersetzungen realisiert werden, damit mit geringen Verstellkräften die Sitzlehne schnell in eine gewünschte Winkellage gebracht werden kann. Ein weiterer Vorteil dieser Taumelgetriebe liegt in ihrer selbsthemmenden Charakteristik, so dass auch bei großen Krafteinwirkungen eine ungewollte Lehnenverstellung nahezu ausgeschlossen ist. Die Übersetzungswirkung eines derartigen Taumelgetriebes wirkt in beide Umdrehungsrichtungen.

Aus der DE 10 2004 007 045 B3 ist ein Verstellbeschlag für einen Fahrzeugsitz bekannt, der als Taumelgetriebe ausgebildet ist. Die beiden flächigen Beschlagteile dieses Beschlages weisen eine durch einen Umformprozess erzeugte Innen- bzw. Außenverzahnung auf.

Weiter ist aus der WO 96/17187 A1 ein Exzenter-Achsgetriebe mit einem schräg gelagerten Taumelrad bekannt. Das Taumelrad kämmt mit einem Außenrad im Gehäuse und koppelt zwei konzentrisch gelagerte Wellen.

Für den vorgesehenen Einsatzzweck als Verstellbeschlag für Fahrzeugsitze sollten die Taumelgetriebe möglichst kompakt aufgebaut und zur Übertragung großer Verstellkräfte mit geringen Betätigungskräften geeignet sein. Gleichzeitig ist ein relativ einfacher Aufbau notwendig, damit die Getriebe kostengünstig in Großserie herstellbar sind.

Eine Aufgabe der vorliegenden Erfindung besteht daher darin, ein einfach aufgebautes und kostengünstig herzustellendes Taumelgetriebe anzugeben.

Diese Aufgabe wird dabei erfindungsgemäß gelöst durch ein Taumelgetriebe mit den Merkmalen gemäß Anspruch 1. Dieses Taumelgetriebe eignet sich insbesondere für einen zweiteiligen Verstellbeschlag eines Fahrzeugsitzes.

Im Betrieb eines Taumelgetriebes rollt sich das Taumelrad mit seiner Außenverzahnung taumelnd an der entsprechenden Innenverzahnung ab. Dazu ist es insbesondere notwendig, die Innenverzahnung und die Außenverzahnung des Taumelgetriebes in kämmendem Eingriff zu halten.

Durch die Lagerung des Taumelrads innerhalb eines Gehäuses, welches die Innenverzahnung trägt, wird es möglich, die axiale Anordnung der Innenverzahnung und der Außenverzahnung des Taumelrades aufrecht zu halten, ohne dass ein zusätzliches Sicherungsmittel verwendet werden muss. Mit anderen Worten kann das Gehäuse selbst die axiale Führung für das Taumelrad bereitstellen, und bildet zugleich auch das Außenrad. Insgesamt werden dadurch die Herstellungskosten für ein derartiges Taumelgetriebe bedeutend verringert. Durch eine Teilung entlang einer Teilungsebene ist weiter ein besonders einfacher Zusammenbau und eine kostengünstige Produktion des Gehäuses möglich.

Das vorgenannte Taumelgetriebes besteht aus nur wenigen Bauteilen, nämlich dem Gehäuse und dem Taumelrad. Zudem lassen sich die Bauteile mit nur geringem Spiel und somit geringen Toleranzen montieren. Die geringen Toleranzen sind insbesondere wegen des daraus resultierenden geringen Umschaltspiels bei einer Drehrichtungsumkehr wünschenswert.

Die Teilungsebene des Gehäuses ist insbesondere senkrecht zur Mittenachse des Gehäuses angeordnet. Die einzelnen Gehäuseteile können in Großserie hergestellt werden und bei der Montage des Taumelgetriebes einfach gegeneinander verschraubt, vernietet, verpresst, verklebt oder verschweißt werden. Im Interesse einer besonders kostengünstigen Herstellung kann es insbesondere sinnvoll sein, die Gehäusehälften miteinander zu verpressen. Alternativ kann auch eine Verschweißung sinnvoll sein, die sich schnell und hochgenau mittels einer Laserschweißvorrichtung durchführen lässt. Das Gehäuse ist als ein Flachgehäuse gegeben, das beispielsweise eine diskusartige Form besitzt. Dadurch läßt sich eine besonders kompakte Bauweise des Taumelgetriebes realisieren.

Vorzugsweise ist die Innenverzahnung des Gehäuses entlang der Teilungsebene derart geteilt, dass ein erstes Gehäuseteil und ein zweites Gehäuseteil jeweils einen Teil der getrennten Innenverzahnung umfassen. In dieser Ausführungsform wird zur Montage das Taumelrad einfach in ein Gehäuseteil eingelegt und das zweite Gehäuseteil auf das erste gefügt. Durch das Zusammenfügen beider Gehäuseteile ergibt sich die volle Innenverzahnung des Gehäuses.

In einer bevorzugten Ausführungsvariante der Erfindung weist ein Gehäuseteil ein gegenüber dem anderen Gehäuseteil eine radial zurückversetzte oder verkleinerte Innenverzahnung auf. In diesem Fall wird die zurückversetzte oder verkleinerte Innenverzahnung nur unter hoher Last, die mit einer mechanischen Verformung einhergeht, insbesondere im Crashfall, mit der Außenverzahnung des Taumelrads in Eingriff kommen. Durch den daraus resultierenden zusätzlichen Eingriff in die Verzahnung des zuvor nicht in Eingriff befindlichen Gehäuseteils wird im Crashfall eine bessere Blockadewirkung erreicht.

Besonders kostengünstig lässt sich die Innenverzahnung herstellen, indem diese mittels Umformung in die Gehäusehälften eingebracht ist. In diesem Zusammenhang kann es besonders vorteilhaft sein, wenn die Innenverzahnung mittels eines Tiefziehvorganges in beide Gehäusehälften eingebracht ist, die dann vorzugsweise aus Blech gefertigt sind. Der Press- oder Tiefziehvorgang lässt eine Herstellung mit sehr guter Maßhaltigkeit zu, was für die einwandfreie Funktion des Taumelgetriebes unerlässlich ist. Grundsätzlich eignet sich für den vorgesehenen Einsatzzweck ein hochfestes Stahlblech, das sich ohne Rissbildung in die gewünschte Form bringen lässt. Das Material beider Gehäuseteile muss der Beanspruchung durch den Einsatz als Zahnrad standhalten, wobei jedoch zu berücksichtigen ist, dass Verstellvorgänge über die durchschnittliche Lebensdauer nicht sehr häufig stattfinden, so dass die Hauptbelastung für das Taumelgetriebe und somit das Gehäuse mit Innenverzahnung in der Fixierung und Blockade der zuvor eingestellten Position besteht. Zweckmäßigerweise umfasst das erste Gehäuseteil eine radial einwärts stehende, die Außenverzahnung des Taumelrads umgreifende Anschlagfläche. Mit anderen Worten wird durch eine derartige Anschlagfläche die Außenverzahnung des Taumelrads im Querschnitt etwa L-förmig umgriffen, wodurch das Taumelrad in einer Richtung gegenüber dem ersten Gehäuseteil axial gesichert ist. Die Anschlagfläche weist dabei insbesondere eine zentrale Öffnung auf, was eine materialeinsparende Ausführung darstellt.

Das zweite Gehäuseteil ist vorzugsweise als eine flache Scheibe gegeben, wobei gegebenenfalls die Innenverzahnung eingeschlossen ist. Vorzugsweise ist hierbei das zweite Gehäuseteil insbesondere mit gleichem Außendurchmesser wie das erste Gehäuseteil ausgebildet. Die zweite Gehäusehälfte kann dabei im Wesentlichen als einfaches, kostengünstiges Stanzteil gefertigt sein.

Eine Betätigung des Taumelgetriebes erfolgt häufig über ein Exzentermittel, das in der Regel durch eine Schwenkwelle angetrieben wird. Insbesondere zur Aufnahme der Schwenkwelle umfasst das zweite Gehäuseteil zweckmäßigerweise eine zentrale Lagerbuchse. Die zentrale Lagerbuchse ist beispielsweise einfach als eine Bohrung gegeben, durch die im eingebauten Zustand des Taumelgetriebes, z.B. in einer Sitzverstelleinrichtung, die Schwenkwelle geführt ist.

In einer bevorzugten Ausführungsform ist die Lagerbuchse als ein die Mittenachse umlaufender Bund gegeben, der axial in eine von der Außenverzahnung umrandete zentrale Ausnehmung des Taumelrads hineinragt. In der zentralen Ausnehmung des Taumelrads ist häufig ein Exzentermittel angeordnet. Durch die Ausgestaltung der Lagerbuchse als Bund ist es vorteilhaft möglich, insbesondere das Exzentermittel auf dem ringförmigen Bund zu lagern und zusätzlich die radiale Lagerung des Taumelrads zu verbessern.

Das Taumelrad umfasst einen die zentrale Ausnehmung umlaufenden Kragen, mit welchem das Taumelrad aus einer zentralen Öffnung des Gehäuses axial herausragt. Dadurch wird insbesondere die Handhabung bei der Montage des Taumelgetriebes erleichtert und eine zusätzliche Führung des Taumelrades im Gehäuse erzielt. Die zentrale Öffnung wird dabei insbesondere von der radial einwärtsstehenden Anschlagfläche umgrenzt.

Vorteilhafterweise sind aus fertigungstechnischen Gründen oder aus Montagegründen zumindest ein Gehäuseteil mehrteilig ausgeführt.

Ausführungsbeispiele der Erfindung werden anhand einer Zeichnung näher erläutert. Dabei zeigen:
- Fig. 1:: eine Explosionsdarstellung eines Taumelgetriebes mit zweiteiligem Gehäuse,
- Fig. 2:: ein Taumelgetriebe in einer Schnittansicht mit einer Schnittebene durch die Mittenachse des Gehäuses, und
- Fig. 3:: verschiedene Ansichten des Taumelgetriebes mit verbundenen Gehäusehälften.

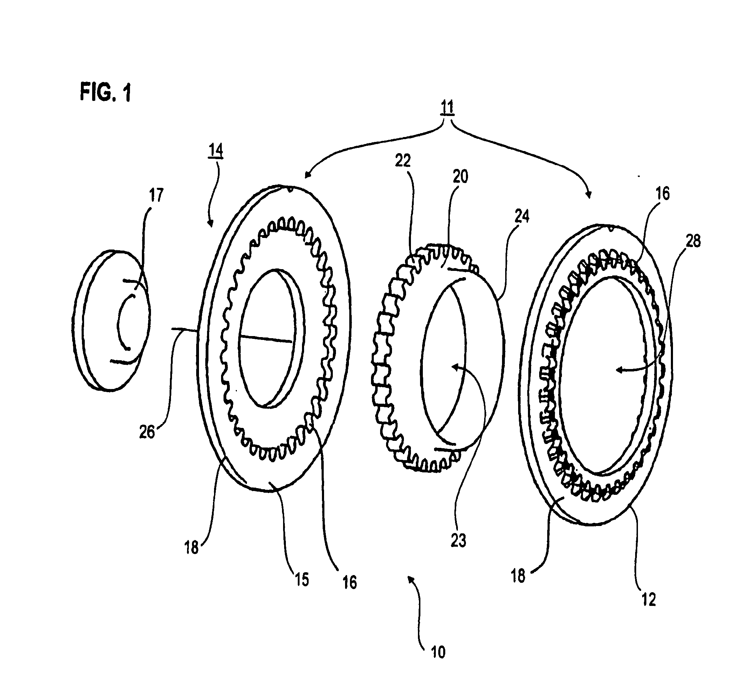

Aus der Explosionsdarstellung gemäß Fig. 1 werden die Bestandteile eines beispielhaften Taumelgetriebes 10 ersichtlich. Demnach umfasst das Taumelgetriebe 10 ein Gehäuse 11 mit einem ersten und einem zweiten Gehäuseteil 12 bzw.14, sowie ein im Gehäuse 11 geführtes Taumelrad 20.

Die Gehäuseteile 12, 14 sind entlang einer Teilungsebene getrennt. Die in das Gehäuse 11 eingebrachte Innenverzahnung 16 ist dabei ebenfalls getrennt, so dass beide Gehäuseteile 12, 14 jeweils einen Teil der Innenverzahnung 16 aufweisen. Das zweite Gehäuseteil 14 ist aus einem planaren Ring 15, in den ein Teil der Innenverzahnung 16 eingebracht ist, und aus einer separate Lagerbuchse mit einem ringförmigen Bund 17 zusammengesetzt. Insgesamt hat damit das zweite Gehäuseteil 14 im wesentlichen die Gestalt einer flachen Scheibe. Der ringförmige Bund 17 ist insbesondere zur drehbaren Lagerung von hier nicht dargestellten Exzentermitteln zum Antrieb des Taumelgetriebes 10 vorgesehen.

Jeder der beiden Gehäuseteile 12 und 14 kann im Wesentlichen aus einer gestanzten Blechscheibe gebildet sein, wodurch ein äußerer, flacher Ringabschnitt 18 verbleibt. Die gestanzten Blechscheiben werden jeweils beispielsweise durch einen anschließenden Tiefziehvorgang mit der Innenverzahnung 16 versehen. Von der Innenverzahnung 16 des ersten Gehäuseteils 12 ist hierbei lediglich die Rückseite, d.h. die Negativkontur, ersichtlich. Da die beiden im Wesentlichen scheibenförmigen Gehäuseteile 12, 14 vorzugsweise den gleichen Außendurchmesser aufweisen, können sie mit ihren parallelen Ringabschnitten 18 aneinander gefügt werden, bspw. durch Verpressen oder Verschweißen der Ringabschnitte 18.

Der zwischen den beiden Gehäuseteilen 12, 14 gebildete Raum dient zur Aufnahme des Taumelrades 20, das eine Außenverzahnung 22 aufweist, die mit der Innenverzahnung 16 des Gehäuses 11 kämmt.

Das Taumelrad 20 besitzt eine zentrale Ausnehmung 23, die hier von einem Kragen 24 umlaufen wird. Im zusammengebauten Zustand des Gehäuses 11 ragt der Kragen 24 aus einer im Bereich einer Mittenachse 26 des Gehäuses 11 angeordneten zentralen Öffnung 28 der ersten Gehäusehälfte 12 axial heraus.

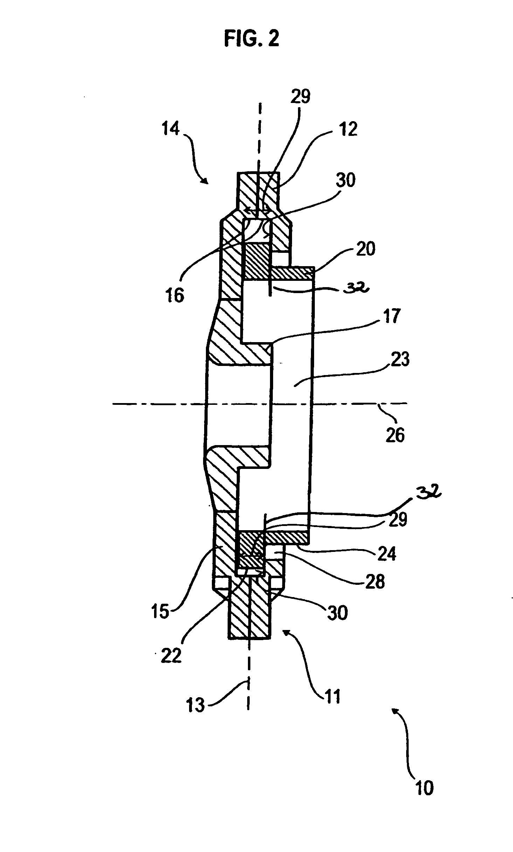

Die Schnittdarstellung der Fig. 2 verdeutlicht die Anordnung der zuvor beschriebenen Einzelteile in zusammengebautem Zustand des Taumelgetriebes 10. Das Taumelrad 20 ist innerhalb des Gehäuses 11 exzentrisch zu dessen Mittenachse 26 angeordnet. Dadurch kämmt die Außenverzahnung 22 des Taumelrads 20 mit der zusammengesetzten Innenverzahnung 16 des Gehäuses 11, wodurch die gewünschte Drehübertragung erzielt wird.

Die Teilungsebene 13 des Gehäuses 11 befindet sich hier ungefähr mittig zur Zahnbreite 29 der Innenverzahnung 16, so dass die Innenverzahnungen 16 der beiden Gehäuseteile 12 und 14 je zur Hälfte mit den resultierenden Verzahnungskräften beaufschlagt werden. Dabei ist es aber auch möglich, eine der beiden Teilverzahnungen zurückzusetzen, so dass die Innenverzahnung 16 nur eines Gehäuseteils 12,14 mit der Außenverzahnung 22 des Taumelrads 20 kämmt. In diesem Fall kann das Taumelrad 20 insbesondere bei einer mechanischen Verformung unter hoher Last, z.B. beim Einwirken hoher Crashkräfte, mit der Teilverzahnung des anderen Gehäuseteils kämmen, wodurch eine bessere Blockadewirkung und insofern eine höhere Chrashfestigkeit erzielt wird.

In der Schnittdarstellung gem. Fig. 2 ist weiter deutlich eine radial einwärts stehende Anschlagfläche 30 des ersten Gehäuseteils 12 erkennbar. Die Anschlagfläche 30 umgreift die Außenverzahnung 22 des Taumelrads 20 in etwa L-förmig. Dadurch ist das Taumelrad 20 zwischen der Anschlagfläche 30 und der zweiten Gehäusehälfte 14 eingespannt und axial gesichert ist. Ein zusätzliches Sicherungsmittel zur axialen Sicherung des Taumelrads 10 ist somit überflüssig. Gut erkennbar ist auch, wie die Anschlagfläche 30 die zentrale Öffnung 28 der ersten Gehäusehälfte 12 umgrenzt und wie das Taumelrad 20 mit seinem Kragen 24 aus der Öffnung 28 herausragt.

Der ringförmige Bund 17 der Lagerbuchse des zweiten Gehäuseteils 14 ragt in die Ausnehmung 23 des Taumelrads 20 hinein. Dadurch wird insbesondere ein Aufnahmeraum 32 gebildet, in dem die hier nicht dargestellten Exzentermittel zum Antrieb des Taumelgetriebes 10 aufgenommen und drehbar auf dem Bund 17 der Lagerbuchse gelagert werden können.

Gemäß den Fig. 1 und 2 ist eine separate Lagerbuchse mit dem ringförmigen Bund 17 in dem planaren Ring 15 des zweiten Gehäuseteils 14, beispielsweise durch ein Verpressen oder Laserschweißen, fixiert. Durch die Ausführung der Lagerung als separate Lagerbuchse können problemlos unterschiedliche Materialstärken miteinander kombiniert werden. Das gleiche gilt auch für das Taumelrad 20, das ebenfalls zu diesem Zweck zweiteilig ausgeführt sein kann. Alternativ ist es ebenso möglich, den Bund 17 gleich bei der Fertigung des zweiten Gehäuseteils 14 aus einer Blechscheibe herauszuformen.

Aus Fig. 2 wird weiter ersichtlich, dass das Taumelrad 20 entlang der Trennebene 32 geteilt ausgeführt sein kann.

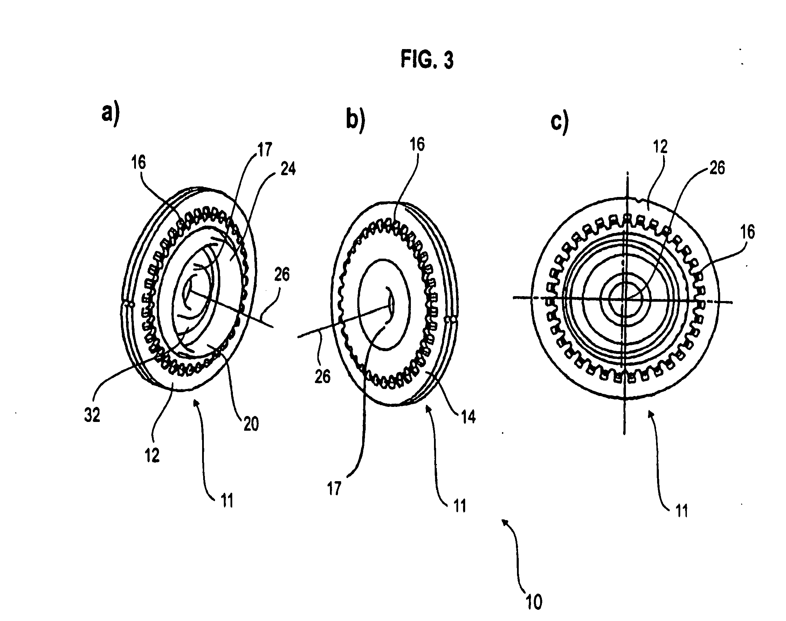

Die schematische Darstellung der Fig. 3 zeigt drei Ansichten des montierten Taumelgetriebes 10, umfassend das Gehäuse 11 mit den beiden Gehäuseteilen 12 und 14, sowie das darin gelagerte Taumelrad 20, jedoch ohne die in dem Aufnahmeraum 32 aufgenommenen, für einen drehbaren Antrieb des Taumelgetriebes 10 notwendigen Exzentermittel. Die Figur 3a zeigt eine Schrägansicht des Taumelgetriebes 10 von der Seite des ersten Gehäuseteils 12. Die Figur 3b zeigt ebenso eine Schrägansicht des Taumelgetriebes 10, diesmal von der Seite des zweiten Gehäuseteils 14. Die Figur 3c zeigt dasselbe Taumelgetriebe 10 in einer Frontalansicht von dem ersten Gehäuseteil 12 aus.

In allen drei Ansichten gut erkennbar ist die flache Bauweise des Taumelgetriebes 10 mit den flach aneinander liegenden, scheibenförmigen Gehäuseteilen 12, 14, wobei sich jeweils die Negativkontur der in dem ersten und dem zweiten Gehäuseteil 12, 14 eingeformten Innenverzahnung 16 von außen deutlich abzeichnet.

In Fig. 3a gut zu erkennen ist, wie der Aufnahmeraum für die Exzentermittel von dem ringförmigen Bund 17 der Lagerbuchse des zweiten Gehäuseteils 14 und dem Kragen 24 des Taumelrads 20 gebildet wird.

In der Fig. 3b ist insbesondere zu erkennen, wie sich der Bund 17 der Lagerbuchse des zweiten Gehäuseteils 14 in axialer Richtung in die Zeichenebene hinein wölbt.

### Bezugszeichenliste

- 10: Taumelgetriebe
- 11: Gehäuse
- 12: erstes Gehäuseteil
- 13: Teilungsebene
- 14: zweites Gehäuseteil
- 15: Ring
- 16: Innenverzahnung
- 17: Bund
- 18: Ringabschnitt
- 20: Taumelrad
- 22: Außenverzahnung
- 23: Ausnehmung
- 24: Kragen
- 26: Mittenachse
- 28: Öffnung
- 29: Zahnbreite
- 30: Anschlagfläche
- 32: Trennebene

## Patentansprüche

1. Taumelgetriebe (10), für einen Verstellbeschlag eines Fahrzeugsitzes, mit einem ein Außenrad bildenden Flachgehäuse (11) mit Innenverzahnung (16) und mit einem innerhalb des Gehäuses (11) angeordneten, exzentrisch um eine Mittenachse (26) des Gehäuses (11) drehbaren einzelnen Taumelrad (20) mit Außenverzahnung (22), wobei die Außenverzahnung (22) des Taumelrads (20) mit der Innenverzahnung (16) des Gehäuses (11) kämmt, wobei das Gehäuse (11) zwei entlang einer Teilungsebene (13) fest aneinander gefügte Gehäuseteile (12,14) umfasst, und wobei das Taumelrad (20) einen eine zentrale Ausnehmung (23) umlaufenden Kragen (24) umfasst, mit welchem das Taumelrad (20) aus einer zentralen Öffnung (28) des Gehäuses (11) axial herausragt.

2. Taumelgetriebe (10) nach Anspruch 1,
wobei das erste Gehäuseteil (12) eine radial einwärts stehende, die Außenverzahnung (22) des Taumelrads (20) umgreifende Anschlagfläche (30) umfasst.

3. Taumelgetriebe (10) nach Anspruch 1 oder 2,
wobei das zweite Gehäuseteil (14) im Wesentlichen als eine flache Scheibe (15) ausgebildet ist.

4. Taumelgetriebe (10) nach einem der Ansprüche 1 bis 3,
wobei das zweite Gehäuseteil (14) eine zentrale Lagerbuchse umfasst.

5. Taumelgetriebe (10) nach einem der Ansprüche 1 bis 4,
wobei wenigstens ein Gehäuseteil (12,14) mehrteilig ausgeführt ist.

6. Taumelgetriebe (10) nach einem der Ansprüche 1 bis 5,
wobei das Taumelrad (20) mehrteilig ausgeführt ist.

## Claims

1. Wobble mechanism (10) for an adjustment fitting of a vehicle seat, with a flat housing (11) forming an external wheel with internal toothing (16) and an oscillating wheel (20) with external toothing (22), the oscillating wheel (20) being arranged within the housing (11) and being eccentrically rotatable around a center axis (26) of the housing (11), whereby the external toothing (22) of the oscillating wheel (20) engages with the internal toothing (16) of the housing (11), the housing (11) comprising two housing parts (12,14) which are tightly put together along a dividing plane (13) and the oscillating wheel (20) comprising a collar (24) surrounding a central recess (23), whereby the oscillating wheel (20) axially protrudes with the collar (24) from a central opening (28) of the housing (11).

2. Wobble mechanism (10) according to claim 1,
the first housing part (12) comprising a radially inward directed stop face (30), which wraps around the external toothing (22) of the oscillating wheel (20).

3. Wobble mechanism (10) according to claim 1 or 2,
the second housing part (14) being substantially formed as a flat disc (15).

4. Wobble mechanism (10) according to one of the claims 1 to 3,
the second housing part (14) comprising a central bearing bush.

5. Wobble mechanism (10) according to one of the claims 1 to 4,
at least one housing part (12, 14) being multipartly designed.

6. Wobble mechanism (10) according to one of the claims 1 to 5, the oscillating wheel (20) being multipartly designed.

## Revendications

1. Mécanisme oscillant (10) destiné à une ferrure de réglage d'un siège de véhicule, avec un corps plat (11) formant une roue extérieure pourvue d'une denture intérieure (16) et une roue oscillante (20) pourvue d'une denture extérieure (22), la roue oscillante (20) étant disposée à l'intérieur du corps (11) et pouvant être tournée excentriquement autour d'un axe central (26) du corps (11), la denture extérieure (22) de la roue oscillante (20) s'engrenant dans la denture intérieure (16) du corps (11), le corps (11) comprenant deux parties du corps (12, 14), qui sont réunies de manière serrée le long d'un plan de division (13) et la roue oscillante (20) comprenant un collier (24) qui entoure l'evidement central (23) et avec lequel la roue oscillante (20) dépasse axialement d'une ouverture centrale (28) du corps (11).

2. Mécanisme oscillant (10) selon la revendication 1,
la première partie du corps (12) comprenant une surface de butée (30) qui est dirigée radialement vers l'intérieur et qui s'enroule autour de la denture extérieure (22) de la roue oscillante (20).

3. Mécanisme oscillant (10) selon la revendication 1 ou 2,
la deuxième partie du corps (14) étant essentiellement formée comme un disque plat (15).

4. Mécanisme oscillant (10) selon l'une des revendications 1 à 3,
la deuxième partie du corps (14) comprenant une douille de palier centrale.

5. Mécanisme oscillant (10) selon l'une des revendications 1 à 4,
au moins une partie du corps (12, 14) étant construite en plusieurs parties.

6. Mécanisme oscillant (10) selon l'une des revendications 1 à 5,
la roue oscillante (20) étant construite en plusieurs parties.
